# EUROPÄISCHE PATENTSCHRIFT

(11) **EP 2 452 552 B1**
(45) Veröffentlichungstag und Bekanntmachung des Hinweises auf die Patenterteilung: **02.07.2014**
(21) Anmeldenummer: 11008915.8
(22) Anmeldetag: 09.11.2011
(51) Int. Cl.: A01F 25/20

(54) **Vorrichtung zum Entnehmen von Silagegut**
Device for removing silage
Dispositif d'extraction de produits d'ensilage

(30) Priorität: 12.11.2010 DE 102010051089
(43) Veröffentlichungstag der Anmeldung: 16.05.2012
(73) Patentinhaber: Bernard van Lengerich Maschinenfabrik GmbH & Co. KG, 48488 Emsbüren (DE)
(72) Erfinder: Dirting, Ewald, 48282 Emsdetten (DE); Van Lengerich, Bernhard, 48488 Emsbüren (DE)
(74) Vertreter: Pott, Ulrich

(56) Entgegenhaltungen:
- EP-A1- 0 068 305
- DE-A1- 3 111 868
- DE-U1- 8 619 709
- DE-U1- 9 105 616
- FR-A1- 2 148 060

## Beschreibung

Die Erfindung bezieht sich auf eine Vorrichtung zum Entnehmen von Silagegut aus einem Flach- oder Fahrsilo in einer Ausbildung nach dem Oberbegriff des Patentanspruches 1.

Vorrichtungen der vorgenannten Art sind als sogenannte Siloblockschneider bekannt und dienen dazu, in einem Flach- oder Fahrsilo bevorratetes siliertes Erntegut für einen Fütterungsvorgang als Block auszuschneiden und dann das silierte Erntegut des Silagegutblockes in einem Futtergang auszubringen oder einem Silageblock in ein Futterverteilfahrzeug einzubringen.

Aus der DE 36 01 112 A1 ist eine Vorrichtung zum Entnehmen von Silagegut bekannt, bei der der Schneidrahmen U-förmig gestaltet ist mit an den beiden seitlichen Rahmenschenkeln vorgesehenen seitlichen Schneidmessern und einem am vorderen Rahmenschenkel vorgesehenen vorderen Schneidmesser, die jeweils als Einzelmesser hin- und hergehend über Hydraulikzylinder angetrieben sind.

Die Antriebs- und Kraftübertragungselemente der Einzelschneidmesser sind in besonders bevorzugter Weise in gekapselten Schutzräumen angeordnet, so dass die gleichsinnig ausgeführten Schneidbewegungen in verringertem Maße dazu führen können, dass ausgeschnittene Fasern des Silagegutes in Räume eintreten können, in denen Antriebs- und Kraftübertragungselemente angeordnet sind.

Nachteilig bei dieser Ausführungsform ist insbesondere bei größeren Abmessungen des Schneidrahmens, dass sich aufgrund der Schneidbewegungen Lageveränderungen des Rahmens einstellen mit der Konsequenz, dass sich die Schneidmesser ins Silagegut festsetzen können und kein exakter Silageblock mehr auszuschneiden ist.

Aus der EP 0 068 305 A1 ist eine Vorrichtung der eingangs genannten Art bekannt, bei der die Schneidorgane als jeweils für sich geführten und angetriebenen, an herabhängenden Haltern befestigte Messerklingen ausgebildet sind, die in ihrer Längserstreckung und Antriebsbewegung derart aufeinander abgestimmt sind, dass in den Eckbereichen zwischen den benachbarten Messerklingen einander rechtwinklig überkreuzende Schnittlinien erzeugt werden und die Messerklingen in ihren Haltern jeweils an eine Exzenterschleife in vertikaler Ebene ausführenden Antriebs- und Führungsorganen angebracht sind. Aufgrund der Exzenterschleifenbewegung der Schneidmesser sind auch hierbei Lageveränderungen des Rahmens nicht zu vermeiden, wiederum mit der Konsequenz, dass sich die Schneidmesser im Silagegut festsetzen können und kein exakter Silagegut mehr auszuschneiden ist.

Aus der DE 91 05 616 U1 ist eine Vorrichtung zum Entnehmen von Silagegut bekannt, bei der vorderseitig zwei Schneidorgane vorgesehen sind, die aus oszillierenden Messern bestehen, die an feststehenden Gegenschneiden geführt sind. Diese sind in einer Schneidebene hin- und herbeweglich und über Antriebsorgane in ihrer Antriebsbewegung zu versetzen, die über Eckbereiche eines im wesentlichen U-förmigen Schneidrahmens geführt sind. Über diese Antriebsorgane lässt sich eine Antriebsbewegung nicht in verschleißunanfälliger Weise realisieren.

Es ist Aufgabe der vorliegenden Erfindung, diese Nachteile zu beseitigen und eine Vorrichtung zum Entnehmen von Silagegut zu schaffen, mit der ein exakter Ausschnitt eines Silageblockes durchzuführen ist und bei der die Schneidorgane exakt und kompensiert gehalten werden können. Zur Lösung dieser Aufgabe zeichnet sich die Vorrichtung der eingangs genannten Art dadurch aus, dass die beiden einander überlappenden Bereiche der Antriebsorgane beider Schneidmesser der vorderen Schneidvorrichtungen nach Art einer Zahnstange ausgebildet sind, zwischen denen ein mit den Zahnstangen der Antriebsorgane kämmendes Stirnrad zur Übertragung der Schneidbewegungen der beiden Schneidmesser der vorderen Schneidvorrichtung vorgesehen ist.

Damit ist eine Vorrichtung zum Entnehmen von Silagegut geschaffen, bei der die vorderen Schneidmesser aufgrund ihrer doppelten und gegensinnig angetriebenen Ausbildung stets dafür sorgen, dass der Rahmen keine Bewegung zur einen oder zur anderen Seite mehr ausüben kann, weil während der Schneidbewegung entweder die Schneidmesser aufeinander zu bewegt werden mit einer Schneidbewegungskomponente zur Mitte des Schneidrahmens hin oder zum anderen eine Schneidbewegung, bei der sich die Schneidmesser voneinander wegbewegen und Schneidbewegungskomponenten einmal zur linken und einmal zur rechten Seite des Rahmens ausführen. Damit sind die Schneidbewegungskomponenten kompensiert, so dass sich nicht mehr das Risiko ergibt, das sich aufgrund von Versatzbewegungen des Schneidrahmens die Schneidmesser im Silagegut festsetzen. Bevorzugterweise ist den beiden vorderen Schneidmessern eine feststehende Gegenschneide zugeordnet, so dass die zu bewegenden Teile trotz der zwei Schneidmesser an der vorderen Schneidvorrichtung minimiert sind.

Die an den seitlichen Rahmenschenkel vorgesehenen Schneidmesser können wie herkömmlich als einstückige Schneidmesser ausgeführt sein, die sich jedoch auch an einer festen Gegenschneide entlang bewegen. Als Krafterzeuger können weiterhin Hydraulikzylinder vorgesehen sein.

Um den Hydraulikfluss und die gegensinnigen Schneidbewegungen exakt und kompensiert zu halten, ist nach der Erfindung vorgesehen, dass die beiden vorderen Schneidmesser mechanisch gekoppelt sind, indem sie über eine Zahnstangen/Stirnradverbindung mechanisch zu koppeln sind, wobei Antriebselemente Bereiche haben, die sich überlappen mit einem entsprechenden Höhenabstand. Dazu sind sie in diesem sich überlappenden Bereich nach Art einer Zahnstange mit einer Verzahnung ausgebildet, die jeweils mit einem Stirnrand kämmen.

Weitere vorteilhafte Ausgestaltungen der Erfindung sind in weiteren Unteransprüchen, der weiteren Beschreibung und der Zeichnung enthalten. In der Zeichnung zeigen:

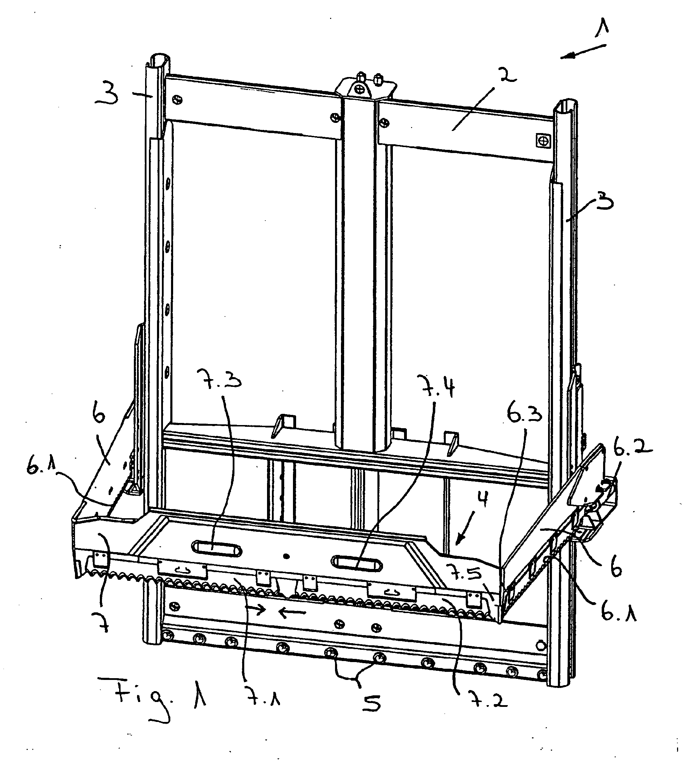

- Fig. 1: eine perspektivische Darstellung eines Ausführungsbeispiels einer Vorrichtung zum Entnehmen von Silagegut nach der Erfindung;
- Fig. 2: eine Draufsicht auf das vordere Schneidwerk des Ausführungsbeispiels nach Fig. 1,

In der Zeichnung sind grundsätzlich gleichwirkende Teile mit übereinstimmenden Bezugsziffern beziffert. Allgemein mit 1 ist die Vorrichtung zum Entnehmen von Silagegut beziffert, die ein Gestell 2 aufweist mit seitlichen Führungen 3, in der ein allgemein mit 4 bezifferter Schneidrahmen auf- und abbeweglich geführt ist. Bei 5 sollen noch nicht dargestellte Zinkengabeln vorgesehen sein, um mit der Vorrichtung in einen Fahrsilo einzufahren und einen ausgeschnittenen Silageblock zu transportieren.

Der Schneidrahmen 4 weist zwei seitliche Schneidvorrichtungen 6 und eine vordere Schneidvorrichtung 7 auf. Die seitlichen Schneidvorrichtungen 6 haben jeweils ein hin- und herbewegliches Schneidmesser 6.1, das über Hydraulikzylinder 6.2 anzutreiben ist. Die seitlichen Schneidmesser 6.1 gleiten entlang einer fest stehenden Gegenschneide 6.3.

Das vordere Schneidwerk hat zwei einzelne Schneidmesser 7.1 und 7.2, die jeweils über separate Krafterzeuger, in diesem Beispiel ebenfalls Hydraulikzylinder 7.3, 7.4., anzutreiben sind. Die beiden vorderen Schneidmesser 7.1 und 7.2. sind gegensinnig anzutreiben. Während ihrer einen Schneidbewegung bewegen sie sich aufeinander zu und werden in einer nachfolgenden Schneidbewegung voneinander wegbewegt, so dass sie sich wegbewegenden Schneidbewegung sich voneinander entfernen und auf die beiden seitlichen Schneidmesser 6.1 zu bewegt werden. Dadurch wird jeweils der Schneidrahmen in Ruhe gehalten und macht keine Setzerscheinigungen zur einen oder zur anderen Seite durch. Auch den beiden vorderen Schneidmesser 7.1 und 7.2 ist eine einstückige, sich über die vordere Breite des Schneidrahmens 4 erstreckende Gegenschneide 7.5 zugeordnet.

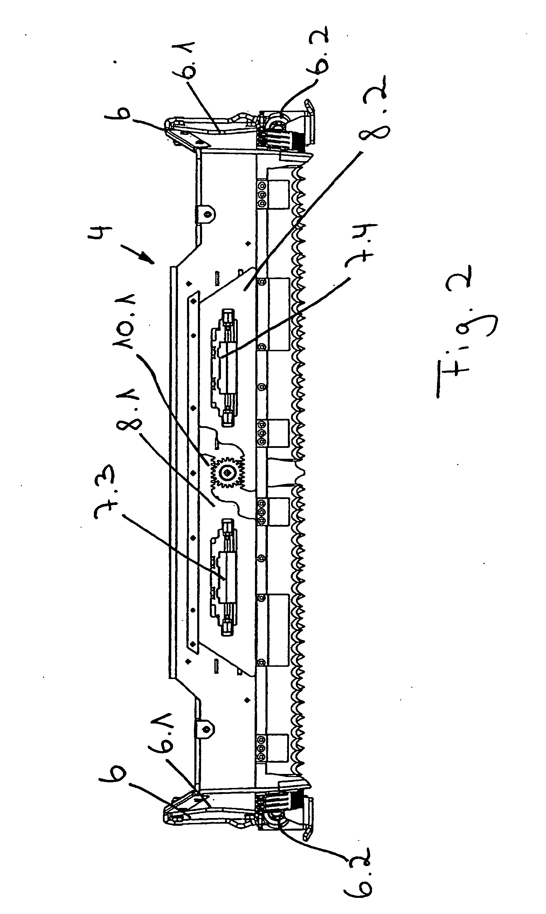

Wie näher aus Fig. 2 hervorgeht, haben die beiden vorderen Schneidmesser 7.1. und 7.2 neben den Hydraulikzylindern 7.3 und 7.4 Antriebsorgane 8.1 und 8.2 die mit dem jeweiligen Schneidmesser 7.1 und 7.2 gekoppelt sind, über die die Schneidmesser 7.1 und 7.2 miteinander antriebsverbunden sind. Dazu haben die Antriebsorgane 8.1 und 8.2 einander überlappende Bereiche 10.1, 10.2, die nach Art einer Zahnstange ausgebildet sind, zwischen denen ein Stirnrad als Kraftübertragungs- und Antriebselement zwischengeschaltet ist. Damit lässt sich voreinstellbar eine direkte Antriebskopplung dahingehend unterstützen und sicherstellen, wonach die beiden Schneidmesser 7.1 und 7.2 aufeinander zu bewegt werden und voneinander wegbewegt werden können.

## Patentansprüche

1. Vorrichtung (1) zum Entnehmen von Silagegut aus einem Flach- oder Fahrsilo mit einem z.B. an die Dreipunkthydraulik oder dgl. eines landwirtschaftlichen Schleppers anbaubaren Gestells (2) und mit einem U- oder L-förmigen, entlang von Führungen (3) des Gestells auf- und abbewegbaren Schneidrahmen (4) mit zumindest einem seitlichen Rahmenschenkel (6) und einem vorderen Rahmenschenkel (7), wobei dem seitlichen Rahmenschenkel (6) eine hin- und herbewegliche seitliche Schneidvorrichtung und dem vorderen Rahmenschenkel eine hin- und herbewegliche vordere Schneidvorrichtung zugeordnet,sind, wobei die vordere Schneidvorrichtung zwei nebeneinander angeordnete Schneidmesser (7.1, 7.2) aufweist, die gegensinnig ausgerichtete Schneidbewegungen ausüben und sie somit in einer Schneidebene parallele Schneidbewegungen ausführen, die abwechselnd aufeinander zu und voneinander weggerichtet sind, wobei die beiden Schneidmesser (7.1, 7.2) der vorderen Schneidvorrichtung mechanisch gekoppelt sind und Antriebsorgane (8.1, 8.2) der vorderen Schneidmesser (7.1, 7.2) einander mit Höhenabstand überlappende Bereiche haben, zwischen denen ein Element zur Übertragung der Schneidbewegung angeordnet ist, **dadurch gekennzeichnet, dass** die beiden einander überlappenden Bereiche der Antriebsorgane (8.1, 8.2) beider Schneidmesser (7.1., 7.2) der vorderen Schneidvorrichtungen nach Art einer Zahnstange ausgebildet sind, zwischen denen ein mit den Zahnstangen der Antriebsorgane, (8.1, 8.2) kämmendes Stirnrad zur Übertragung der Schneidbewegungen der beiden Schneidmesser (7.1, 7.2) der vorderen Schneidvorrichtung vorgesehen ist.

2. Vorrichtung nach Anspruch 1, **dadurch gekennzeichnet, dass** die vordere Schneidvorrichtung eine feststehende Gegenschneide (7.5) für die beiden nebeneinander angeordneten Schneidmesser (7.1, 7.2) aufweist, die am vorderen Rahmenschenkel (7) einstückig und durchgehend ausgebildet ist.

3. Vorrichtung nach Anspruch 1 oder 2, **dadurch gekennzeichnet, dass** der seitliche Rahmenschenkel (6) ein einstückiges Schneidmesser (6.1) umfasst, das entlang einer fest stehenden Gegenschneide (6.3) die hin- und hergehenden Schneidbewegungen der seitlichen Schneidvorrichtung ausübt.

4. Vorrichtung nach einem der Ansprüche 1 bis 3, **dadurch gekennzeichnet, dass** den beiden Schneidmessern (7.1, 7.2) der vorderen Schneidvorrichtung ein Krafterzeuger (7.3, 7.4) zur Erteilung der Schneidbewegung zugeordnet ist.

5. Vorrichtung nach einem der Ansprüche 1 bis 4, **dadurch gekennzeichnet, dass** Kraftübertragungselemente (8.1, 8.2) der beiden vorderen Schneidmesser (7.1, 7.2) gekapselt in einem gemeinsamen Gehäuse angeordnet sind.

## Claims

1. Device (1) for removing silage from a horizontal or bunker silo, comprising a frame (2) which can be assembled on, for example, the three-point hydraulics or the like of an agricultural tractor and comprising a U-shaped or L-shaped cutting frame (4) which can be moved up or down along guides (3) of the stand and comprises at least one lateral frame member (6) and a front frame member (7), a lateral cutting device, which is movable back and forth, being assigned to the lateral frame member (6) and a front cutting device, which is movable back and forth, being assigned to the front frame member, the front cutting device having two side-by-side cutting blades (7.1, 7.2) which perform cutting movements in opposite directions and thus execute parallel cutting movements in a cutting plane which are alternatingly directed towards and away from each other, the two cutting blades (7.1, 7.2) of the front cutting device being mechanically coupled and the drive mechanisms (8.1, 8.2) of the front cutting blades (7.1, 7.2) having regions which overlap with a vertical spacing, between which regions there is arranged an element for transmitting the cutting movement, **characterised in that** the two overlapping regions of the drive mechanisms (8.1, 8.2) of the two cutting blades (7.1, 7.2) of the front cutting devices are formed in the manner of a toothed rack, between which regions there is provided a cylindrical gear which meshes with the toothed racks of the drive mechanisms (8.1, 8.2) in order to transmit the cutting movements of the two cutting blades (7.1, 7.2) of the front cutting device.

2. Device according to claim 1, **characterised in that** the front cutting device comprises a fixed counter-blade (7.5), which is configured on the front frame member (7) in one piece and continuous, for the two cutting blades (7.1, 7.2) disposed next to one another.

3. Device according to claim 1 or 2, **characterised in that** the lateral frame member (6) comprises a one-piece cutting blade (6.1) that performs the back and forth cutting movements of the lateral cutting device along a fixed counter-blade (6.3).

4. Device according to one of claims 1 to 3, **characterised in that** a force generator (7.3, 7.4) for providing the cutting movement is associated with the two cutting blades (7.1, 7.2) of the front cutting device.

5. Device according to one of claims 1 to 4, **characterised in that** force transmission elements (8.1, 8.2) for the two front cutting blades (7.1, 7.2) are disposed encapsulated in a common housing.

## Revendications

1. Dispositif (1) d'extraction de produit d'ensilage d'un silo plat ou couloir avec un bâti (2) pouvant être monté par exemple sur le système hydraulique à trois points ou similaire d'un tracteur agricole et avec un cadre de coupe (4) en forme de U ou de L, pouvant monter et descendre le long de guidages (3) du bâti, doté d'au moins une branche de cadre latérale (6) et d'une branche de cadre avant (7), à la branche de cadre latérale (6) étant associé un dispositif de coupe latéral à mouvement alternatif et à la branche de cadre avant étant associé un dispositif de coupe avant à mouvement alternatif, le dispositif de coupe avant présentant deux lames disposées l'une à côté de l'autre (7.1, 7.2) qui exercent des mouvements de coupe orientés en sens inverse et réalisent ainsi des mouvements de coupe parallèles dans un plan de coupe, lesquels sont dirigés alternativement les uns vers les autres et les uns loin des autres, les deux lames (7.1, 7.2) du dispositif de coupe avant étant couplées mécaniquement et des organes d'entraînement (8.1, 8.2) des lames avant (7.1, 7.2) présentant des zones se chevauchant à distance verticale, entre lesquelles est disposé un élément pour la transmission du mouvement de coupe, **caractérisé en ce que** les deux zones se chevauchant des organes d'entraînement (8.1, 8.2) de deux lames (7.1, 7.2) des dispositifs de coupe avant sont réalisées comme une crémaillère, entre lesquelles une roue droite s'engrenant avec les crémaillères des organes d'entraînement (8.1, 8.2) est prévue pour la transmission des mouvements de coupe des deux lames (7.1, 7.2) du dispositif de coupe avant.

2. Dispositif selon la revendication 1, **caractérisé en ce que** le dispositif de coupe avant présente une contre-lame (7.5) fixe pour les deux lames (7.1, 7.2) disposées l'une à côté de l'autre, qui est réalisée sur la branche de cadre avant (7) d'un seul tenant et en continu.

3. Dispositif selon la revendication 1 ou 2, **caractérisé en ce que** la branche de cadre (6) latérale comporte une lame (6.1) d'un seul tenant qui exerce le long d'une contre-lame (6.3) fixe les mouvements de coupe alternatifs du dispositif de coupe latéral.

4. Dispositif selon l'une quelconque des revendications 1 à 3, **caractérisé en ce qu'**un générateur de force (7.3, 7.4) destiné à communiquer le mouvement de coupe est associé aux deux lames (7.1, 7.2) du dispositif de coupe avant.

5. Dispositif selon l'une quelconque des revendications 1 à 4, **caractérisé en ce que** des éléments de transmission de force (8.1, 8.2) des deux lames avant (7.1, 7.2) sont disposés encapsulés dans un boîtier commun.
